(19) Europäisches Patentamt
European Patent Office
Office européen des brevets

(11) **EP 3 192 775 A1**

(12) **EUROPEAN PATENT APPLICATION**

(43) Date of publication:
**19.07.2017 Bulletin 2017/29**

(51) Int Cl.:
*C03B 9/16* $^{(2006.01)}$        *F16H 57/04* $^{(2010.01)}$

(21) Application number: **16151219.9**

(22) Date of filing: **14.01.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **BDF Industries S.P.A.**
**36100 Vicenza (IT)**

(72) Inventors:
• **DALLA FONTANA, Oscar**
**36100 Vicenza (IT)**
• **TAMBORINI, Matteo**
**36100 Vicenza (IT)**

(74) Representative: **De Bonis, Paolo**
**Buzzi, Notaro & Antonielli d'Oulx S.r.l.**
**Via Maria Vittoria, 18**
**10123 Torino (IT)**

(54) **A UNIT FOR MOVING ACCESSORIES FOR A HOLLOW GLASS FORMING MACHINE**

(57)     Described herein is a handling unit (1; 1') for accessories (BF, TS) for a hollow glass articles forming machine, the handling unit (1; 1') including a column (2) having a longitudinal axis (Z2) and an accessory-carrying unit (4; 4') connected to said column (2), the column including:
- a stem (8) slidably mounted within a body (6) of said column (2) and axially movable along said longitudinal axis (Z2), wherein said accessory-carrying unit (4) is connected to said stem (8), the stem (8) being hollow,
- a cam (26, 28) configured to impart to said stem (8) a rotary motion around said longitudinal axis (Z2) upon the occurrence of an axial movement of the stem (8) along the longitudinal axis (Z2) itself, and
- an electric motor (10) configured for the axial displacement of said stem (8) between a position extracted with respect to the body (6) of said column (2) and a position retracted with respect to the body (6) of said column (2), wherein in the extracted position of the stem (8) the accessory-carrying unit (4; 4') occupies a first angular position around said longitudinal axis (Z2), and wherein in the retracted position of the stem (8) the accessory-carrying unit (4; 4') occupies a second angular position around said longitudinal axis (Z2), different from said first angular position.

FIG. 1

**Description**

The present invention relates to a handling unit for accessories for a hollow glass articles forming machines of the IS type, in particular for accessories such as the so-called "baffles" (components for introducing forming air in a parison mould), the so-called "blower heads" (components for introducing forming air in a finishing mould), and the so-called "funnels" (funnel conveyors for gobs of molten glass at the inlet of parison moulds).

The handling units of the type in point are configured for providing a displacement of the accessories from a starting position (resting-stand by, usually withdrawn) to a final position (working position), wherein the starting position and the final position have generally a different vertical height and a different angular position around an axis of rotation.

Description of prior art and general technical problem

The various steps that today characterize a process of forming of articles of hollow glass inside forming machines of the IS type include:

- an inlet step of the gobs of molten glass into the parison moulds, wherein the gobs are gravity guided during the downfall into the parison mould through a funnel-shaped conveyor ("funnel");
- a pre-forming step wherein forming air is introduced through one or more "baffles" into corresponding parison moulds;
- a final forming step wherein, via one or more "blower heads", forming air is introduced into corresponding finishing moulds.

Generally, in the IS machines the parison moulds and the finishing moulds are installed into one and the same module on which handling units are in turn installed having a column with a longitudinal axis, and an accessory-carrying unit connected to the column and rotatable around the same longitudinal axis. Each accessory-carrying unit bears a corresponding kit of accessories that may comprise one or more accessories (in group) chosen between the three components indicated in the foregoing.

Each handling unit provides a displacement of the group of accessories from a first resting/stand-by position, generally withdrawn, to a second working position.

The two aforesaid positions are characterized by the fact that they correspond to two different angular positions of each accessory-carrying unit with respect to the longitudinal axis of the column (which is the axis of rotation). The handling units of the known type furthermore envisage that a stem which is linearly operated along the longitudinal axis via a pneumatic actuator, typically of the linear type or via a servo-motored mechanical transmission, be slidably mounted in the column. A cam follower pin having an axis orthogonal to the longitudinal axis of the column is rigidly connected to the stem, wherein the pin engages in a cam track provided into the body of the column and configured for causing a rotation of the stem around the longitudinal axis upon an axial movement of the stem along the axis itself.

This means that the stem is movable between an extracted position and a retracted position to which the two distinct angular positions that provide the resting/stand by position and the working position previously described correspond.

The system in point is however affected by several technical drawbacks, in particular:

- the use of a pneumatic actuation system significantly lowers the positioning precision achievable by the system, making it necessary to arrange compensation portions on the cam track so as to correct the linear positioning errors of the pneumatic actuator,
- the actuation speed of the system is strongly limited for reasons intrinsic to the pneumatic actuator, which does not allow reaching high operational frequencies and that exhibits poor dynamic performances due to the compressibility of the air used by the actuators,
- the resting and working positions are reached by means of mechanical stops (for example abutment members) of the stem, with subsequent shocks and vibrations that drastically reduce the operational life of the device,
- setting up specific motion laws to the pneumatic actuator, with subsequent optimized acceleration and optimized inertial forces to be overcome during displacement, is not feasible.

The prior art furthermore provides further examples, among which :

- the handling unit described in US 9,010,520 that is characterized by an exceptionally complicated construction and for the partition of the working travel in plural distinct movements, wherein one of such movements envisages a rotation of an accessory-carrying unit around a horizontal axis. Owing to such factors, the positioning precision of the system is markedly influenced firstly by the plays existing in the mechanism that provides the handling of the accessories, and the possibility to reach high operational frequencies is strongly limited by the fact that the rotational movement of the entire accessories carrying unit, with oscillation from top down, is very unfavourable from the dynamic stand point in so far as it is subject to significant inertial forces to which the concurrent (or antagonist, according to the direction of motion) of the mass force superimposes.

- the handling unit described in EP 0 915 269 A1, that envisages a connection between cam follower pin and movable stem of the column by means of a threaded coupling; such a solution, owing to the friction between the cam follower pin and the cam track provided within the body of the column, is exposed to the risk of undoing of the cam follower pin, with subsequent generation of plays and imprecisions on the angular position of the accessory-carrying unit which is integral with the mobile stem. Furthermore, the weight of the mobile stem, thus the inertia of the same during displacement, is very high in so far as the thickness of the stem has to be such as to guarantee an effective connection with the cam follower pin. Owing to these factors, such a solution turns out to be markedly limiting in respect of the operational frequency and the positioning precision of the accessory-carrying unit integral with the mobile stem.

Object of the invention

The object of the present invention is that of solving the aforementioned technical drawbacks. Particularly, the object of the present invention is to provide a handling unit for accessories for a hollow glass forming machine that provides a high positioning precision of the accessories, durable in time, as well as the possibility to reach operational frequencies higher than those of the handling units of the known type.

Summary of the invention

The object of the present invention is achieved by handling unit having the features forming the subject of the appended claims, which form an integral part of the technical disclosure herein provided in relation to the invention.

Particularly, the object of the present invention is achieved by a handling unit of accessories for a hollow glass article forming machines, the handling unit including a column having a longitudinal axis and an accessory-carrying unit connected to said column, said column including:

- a stem slidably mounted within a body of said column and axially movable along said longitudinal axis, wherein said accessory-carrying unit is connected to said stem, said stem being hollow,
- a cam configured to impart to said stem a rotary motion around said longitudinal axis upon a movement of the stem along the same longitudinal axis, and
- an electric motor configured for the axial displacement of said stem between a position extracted with respect to the body of said column and a position retracted with respect to the body of said column, wherein in the extracted position of the stem the accessory-carrying unit occupies a first angular position around said longitudinal axis, and wherein in the retracted position of the stem the accessory-carrying unit occupies a second angular position around said longitudinal axis different from said first angular position, wherein:
- said cam includes a cam follower pin engaged in a cam track provided into the body of said column, wherein the cam follower pin is fixed to said stem and radially protrudes with respect thereto,

Said cam follower pin traverses the stem and engages into walls thereof in correspondence of two wall areas arranged on opposite sides with respect to said longitudinal axis.

Brief description of the drawings

The invention will now be described with reference to the attached figures provided purely by way of non limiting example, wherein :

- figure 1 shows a pair of handling units according to a first embodiment of the invention coupled to a mould-carrying unit of hollow glass articles forming machine,
- figure 2A and figure 2B are two sectional views according to radial planes identified by the traces IIA-IIA e IIB-IIB of figure 1,
- figure 3A and figure 3B illustrate two different views of an accessory-carrying unit that equips the handling units of figure 1, in particular figure 3A is a plane view according to the arrow IIIA of figure 3B,
- figure 4 is a perspective view similar to those of figure 1 but illustrating the handling units in a different operating position,
- figure 5 is a plane view that reproduces in a false view both the operating position of each handling unit of figure 1,
- figure 6 is a perspective view similar to that of figure 1 but illustrating handling units according to a second embodiment of the invention,

- figure 7A and figure 7B are two views similar to those of figures 3A and 3B, wherein the view of figure 7A is a plan view according to the arrow VIIA of figure 7B,
- figure 8 is a perspective view similar to those of figure 5, but illustrating handling units in accordance with figure 6,
- figure 9 is a false view similar to those of figure 5 but refer to the second embodiment of the handling units according to the invention, and
- figures 10A and 10B show a variant of the handling unit of figures 6 to 9 in a corresponding operating position.

Detailed description

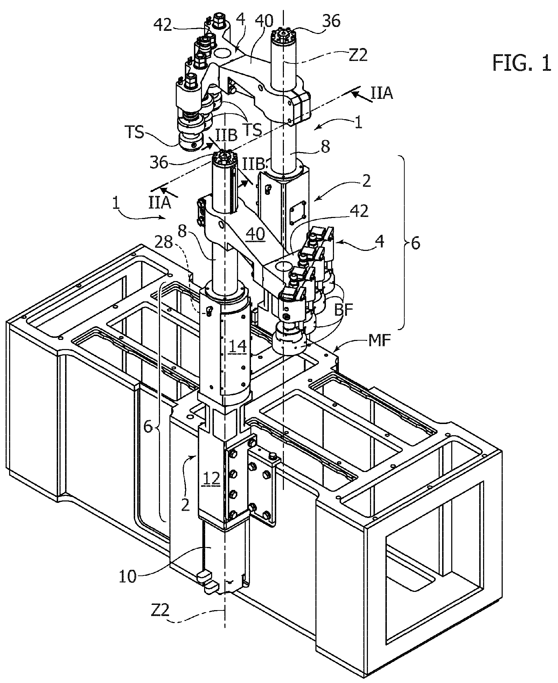

With reference to figure 1, reference number 1 indicates as a whole a handling unit for accessories of a hollow glass article forming machine according to a first embodiment of the invention. Figure 1 illustrates two handling units 1 coupled to a mould-carrying frame MF configured for housing the parison moulds and finishing moulds which are fed independently by each of the handling units 1 fixed to the frame MF.

Each handling unit 1 includes a column 2 having a longitudinal axis Z2 with vertical orientation and an accessory-carrying unit 4 connected to the column 2.

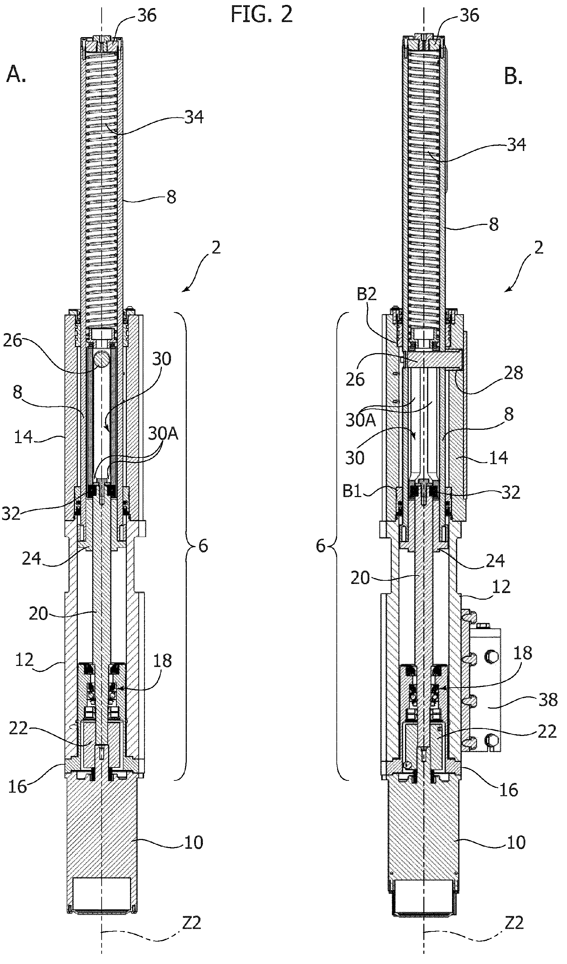

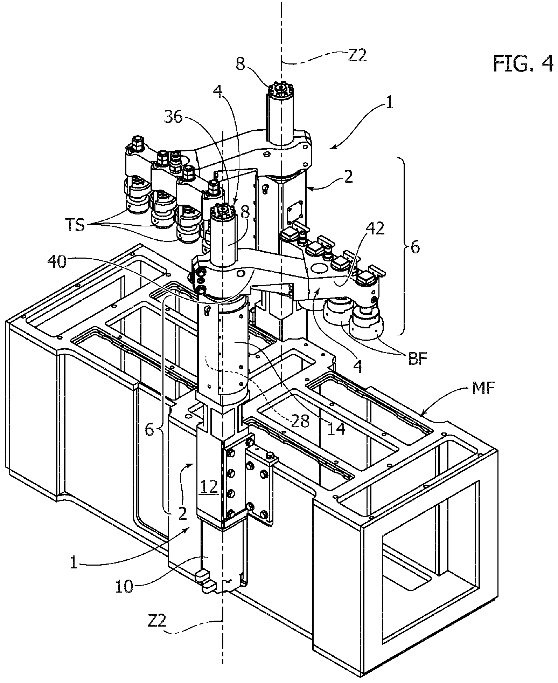

More in detail, with reference also to figures 2A and 2B, each column 2 includes a body 6 having an overall hollow tubular shape into which a stem 8 is slidably mounted along the axis Z2. The stem 8 is movable with respect to the body 6 between an extracted position shown in figure 2 and a retracted position, which is visible for example in figure 4.

In other words, the body 6 provides a casing relative to which the stem 8 moves between a retracted position and an extracted position. The stem 8 is to this end guided with respect to the body 6 by means of a first bushing B1, fixed, and a second bushing B2, adjustable, both fitted at opposite ends of the sleeve 14.

At an end of the body 6, opposite with respect to the end from which the stem 8 protrudes, an electric motor 10 of the rotary type with axis of rotation coaxial to the axis Z2 is fixed. Preferably, the electric motor 10 is a servo motor with full electronic control.

More in detail, the body 6 of the column 2 includes a first sleeve 12 and a second sleeve 14 arranged coaxial to one another and to the axis Z2 and connected to one another in sequence. The sleeve 12 provides a connection interface with the electric motor 10, for example in this embodiment by means of the interposition of a hub 16. The hub 16 includes a bearing pack 18 configured for bearing in rotation a threaded bar 20 arranged coaxially to the axis Z2. The threaded bar 20 extends into the sleeve 12 and traverses the hub 16 protruding with respect thereto in at a free end on which a joint 22 fits. The joint 22 connects in rotation the threaded bar 20 and an output shaft of the electric motor 10.

At the opposite end thereof, the threaded bar 20 engages into a recirculating ball nut 24, to which the stem 8 is rigidly connected, also having a hollow shape. The stem 8 in particular fits on the outer cylindrical surface of the nut 24 and houses therein further components of the column 2, as will be described shortly.

A cam follower pin 26 with axis orthogonal with respect to the axis Z2 is fixed to the stem 8. The orientation of the pin 26 is radial to the stem 8, such that the pin 26 engages in a cam track 28 provided on an inner wall of the sleeve 14. The cam track 28 includes a helical portion that is configured for imparting to the stem 8 a rotation around the axis Z2 when the stem 8 is moving axially along the axis Z2 than itself. The helical portion, according to the needs, may be preceded and/or followed by a rectilinear portion that keeps the stem in a determined angular position at the beginning and/or at the end of the linear travel thereof.

According to an advantageous aspect of the present invention, the cam follower pin 26 traverses the stem 8 (hollow) engaging into the walls thereof in correspondence of two wall areas arranged on opposite sides with respect to the longitudinal axis Z2. Note furthermore, as visible in figure 2B, that the traversing of the stem 8 by the cam follower pin 26 takes place in a transverse direction with respect to the axis Z2.

In case of a cylindrical stem 8 such as in the embodiments described herein, the cam follower pin 26 engages into the cylindrical walls of the stem 8 in correspondence of two wall areas diametrically opposite (that, as will be appreciated, are arranged on opposite sides with respect to the longitudinal axis X2 as indicated above). This allow to secure the cam follower pin 26 to the stem 8 without resorting to threaded couplings and furthermore allows to reduce the wall thickness of the stem 8, in so far as the force exchange between the latter and the pin 26 is now distributed onto interface areas instead of the sole interface area made up by the threaded coupling of the known solutions previously described.

Inside the stem 8 the following components are furthermore housed:

- the tubular spacing member 30 abutting on a threaded bar 20 and having the possibility of a relative rotary movement with respect thereto (for example owing to the interposition of a thrust bearing). The tubular spacing member 30, which always keeps the same axial position, includes two axial grooves 30A configured for accommodating the cam follower pin 26 and the relative movement thereof, which slides into the slots 30A in an axial direction along the axis Z2. In particular the sliding occurs during the axial movement of the nut 24 owing to the rotation of the bar 20;

- a helical spring 34 having a high axial extension that abuts at an end thereof on the tubular spacing member 30, and at another end thereof on a plug 36 that closes the stem 8 at the top;
- a cup shaped member 37 that constitutes the means by which the helical spring 34 abuts on the tubular spacing member 30; in particular, the cup shaped member 37 receives the spring 34 and abuts at the end of the tubular spacing member 30 by means of a thrust bearing 37A, with the aim of avoiding undesired transmission of torques between the spring 34 and the tubular spacing member 30, the latter being rotatable together with the stem 8 dragged by the pin 26 along the slots 30A.

The column 2 then includes, in correspondence of the first sleeve 12, a fastening flat member 38 that allows the coupling of the column 2 to the frame MF (preferably in conjunction with at least one further fastening point).

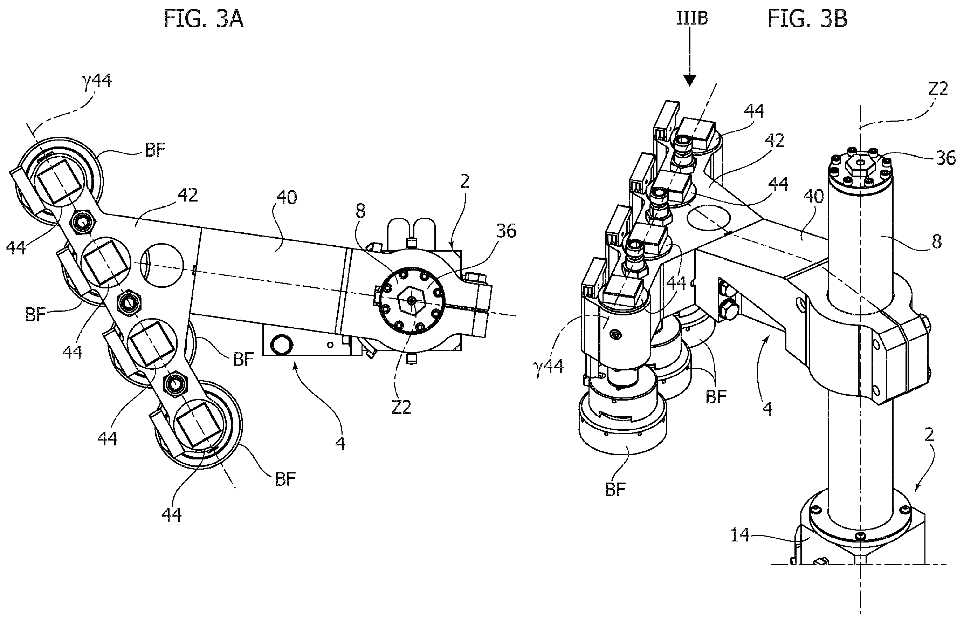

With reference to figures 3A and 3B, the accessory-carrying unit 4 according to the first embodiment of the handling unit according to the invention includes a rocker 40 connected in translation and in rotation to the stem 8 (for example by means of a shape and/or interference coupling) and an accessory-carrying rack 42 arranged at an end of the rocker 40 and bearing a plurality of receptacles 44 for accessories of a hollow glass forming machine aligned along a direction $\gamma 44$ generally non orthogonal with respect to the radial extension of the rocker 40.

In this embodiment the accessories installed on the rack 42 are four baffles BF. Of course, the number of receptaces 44 and the type of accessories than can be carried by the rack 42 may vary. In particular both funnels, both blower heads may be carried at the number of the accessories that can be carried at the same time by the rack 42 may vary as a function of the number of cavities provided in the moulds present in the parison and finishing modules of the IS section.

The operation of the handling unit 1 is as follows.

With the support of figures, 1, 3, 4, 5, each handling unit 1 is configured for moving the accessory-carrying units 4 from a first position shown in figure 1, and consisting in a resting/stand-by (withdrawn) position, to a second position shown in figure 4 and consisting in a working position (in case of baffles and blower heads is the position wherein the inlet of air is provided). More in detail, the resting/stand by position of figure 1 is such that the accessories carried by the units 4 are located in a displaced position with respect to the frame MF, in particular in a position such that they are not capable of feeding any mould contained within the frame MF itself. The position of figure 1 is furthermore a position wherein the stems 8 are in the respective position of maximum extraction, with the result that also the accessory-carrying units 4 are located at the maximum height allowed therefor, so as to constitute the least possible hindrance for the operation of the rest of the forming machine when the intervention thereof is not required.

The position of figure 4 is a working position for the accessory-carrying unit 4, in so far as they are located in a position overlapping the frame MF and such that the accessory carried thereby can feed the cavities of the moulds carried by the frame MF itself. The position of figure 4 differs from the position of figure 1 both in the vertical height of the accessories carrying units 4, which is lower owing to the fact that the position of figure 4 is associated to a complete retraction of the stems 8 and to the fact that the accessory-carrying units 4 occupy an angular position with respect to the axis Z2 different to that occupied in the position of figure 1.

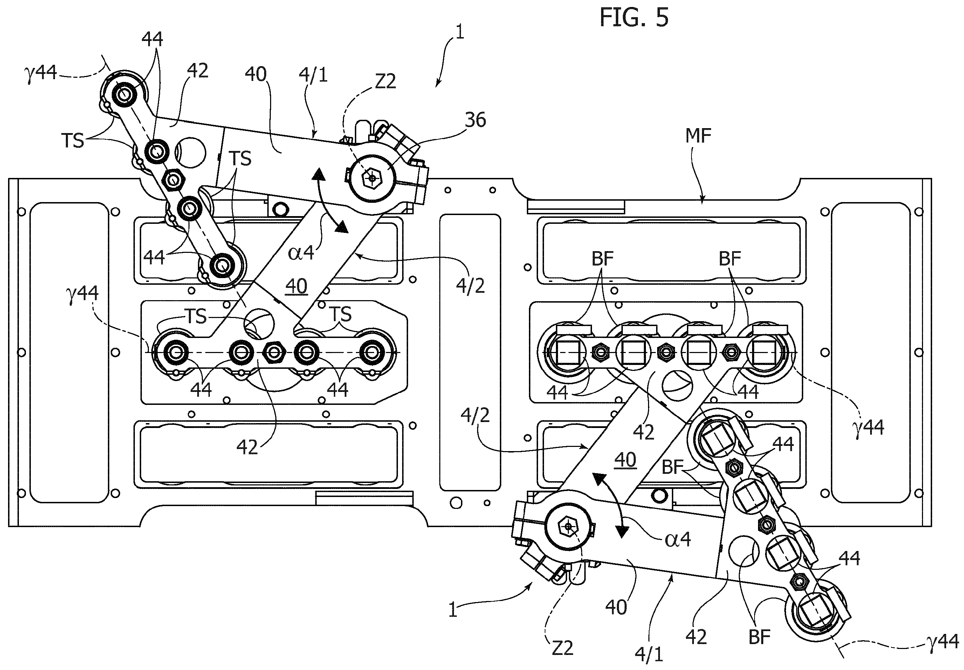

The difference in angular position is readily visible in the false view of figure 5, wherein a rotation angle $\alpha 4$ (around the axis Z2) is shown that constitutes the angular travel of the accessory-carrying units 4. The two operative positions are identified by the references 4/1 and 4/2, wherein the reference 4/1 is associated to the first position and the reference 4/2 is associated to the second position. It can be appreciated how in the second position the accessories carried by the units 4 are aligned to the centre line of the frame MF exactly in correspondence of the position of the cavities of the parison and finishing moulds, while in the first position the accessories are located withdrawn and displaced with respect to the centre line.

It should be noted in this respect that the frame MF carries both parison moulds and finishing moulds. The handling unit 1 that in the representation of figure 5 is in the low right corner (in foreground in figures 1 and 3) is equipped with baffles BF so as to fed the cavities of parison moulds, while the handling unit 1 arranged in the top left corner (in background in figures 1 and 3) is equipped with blower heads TS configured for feeding an equal number of cavities of finishing moulds.

Switching from one position to the other - and vice versa - is provided by means of operation in rotation of the threaded bar 20 by means of the electric motor 10 in combination with the guiding action providing by the cam track 28.

More in detail, the operation in rotation of the threaded bar 20 causes a corresponding axial translation of the axis Z2 of the nut 24. The translation of the nut 24 is transferred identically to the stem 8, in so far as the latter is rigidly connected thereto, those achieving an extraction or a retraction of the stem 8 with respect to the body 6, depending on what the rotation direction of the screw 20 is.

Note that the action of the spring 34 is antagonist with respect to the retraction movement of the stem 8 into the body 6, while it is auxiliary to the extraction movement. In fact, the abutment provided by the tubular spacing member 30 does not vary the position thereof along the axis Z2 in so far as the spacing member 30 in turn abuts, by means of the bearing 32, on the threaded bar 20 that is axially fixed.

On the contrary, the plug 36 that constitutes the second abutment of the spring 34 varies the position thereof with respect to the threaded bar 20 during the movement of the stem 8: this means that a retraction movement will bring about an approaching of the plug 36 to the bar 20 and a subsequent compression of the spring with the development of an antagonist action, while an extraction of the stem 8 will bring about a departure of the plug 36 that will be favored by the releasing of the spring 34.

The provision of the spring 34 constitutes at the same time an element for controlling the driving load acting on the motor 10 owing to the effect of the mass forces acting on the accessory-carrying units 4 and it is likewise a safety measure that allows to bring the stem 8 more rapidly to the extracted position, thereby clearing the working area from the accessory-carrying units 4 should any emergency or failure condition of the motor occur.

As anticipated in the foregoing, advantage is taken of the axial movement of the stem 8 along the axis Z2 to generate a rotary motion component of the stem 8 itself around the axis Z2. This thanks to the fact that an axial movement of the stem 8 forces the cam follower pin 26 to run through the cam track 28, with subsequent variation of the angular position of the pin 26 around the axis Z2 itself. It is thus the path of the cam track 28 that defines the excursion $\alpha 4$ between the two operating positions of the figures 1 and 4.

As anticipated, the electric motor 10 is preferably a fully electronically controlled electric servo motor and for this reason characterized by an extreme high angular positioning precision. The mechanical transmission set between the latter and the stem 8, herein consisting in the threaded bar 20 and in the nut 24 is also extremely precise and can withstand high acceleration and inversions of motion consequent to fast and opposite-wise actuations of the motor 10.

Also having regard to the massive reduction in the resisting torque and after rotation inertia that burden on the output shaft of the motor 10 thanks to the transmission ratio of the threaded bar 20-nut 24 coupling, it is possible to operate with high operational frequency (and frequent inversion of motion) with a very limited torque demand to the motor 10.

The main drawbacks of the handling units of the known type equipped with the pneumatic actuators are those solved, in so far as the handling unit 1 is characterized by a great position in precision - both in height, both in angular position - of the accessories carried by the units 4, as well as for the possibility to operate with higher operational frequencies in accordance with the request of the market.

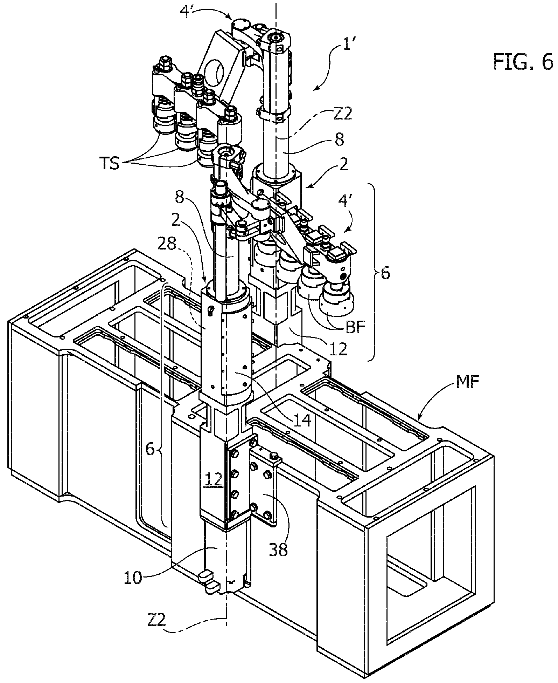

With reference to figures 6 to 9, a second embodiment of handling unit in accordance with the second embodiment of the invention will now be described. The handling unit according to the second embodiment of the invention is indicated by the reference 1' and differs from the group 1 solely in the the geometry of the accessory-carrying unit here indicated by the reference 4'. The column 2 is exactly identical and for this reason will not be described again.

The arrangement of the handling units 1' with respect to the frame MF is also identical, in so far as they serve the same function with the same modalities of the units 1.

All the reference numbers are identical to those previously used designated in the same component already described.

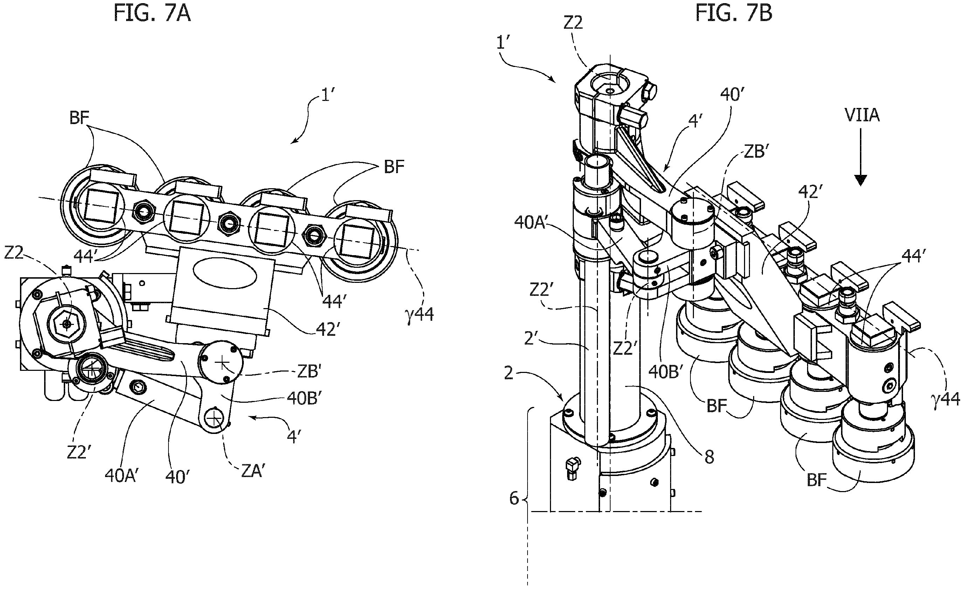

With reference to figures 7A and 7B, the accessory-carrying units 4' include a first rocker 40' connected in translation and in rotation to the stem 8 (by means of shape coupling and/or interference coupling) to which an accessory-carrying rack 42' is connected which in this embodiment includes four receptacles 44' for accessories for the forming machine. Similar to the previous case the seats 44' are preferably aligned along a direction $\gamma 44'$.

However, similarities end here. The following differences with respect to the unit 4 in fact exist:

- the connection of the rack 42' to the rocker 40' is of the articulated type, and
- the rocker 40' is part of an articulated mechanism, preferably an articulated quadrilateral.

More in detail, each unit 4' includes the first rocker 40', a second rocker 40A' and a rod 40B' articulated to both the rockers 40A, 40A'. The rocker 40A' has a first end pivotally connected around a pillar 2' having an axis Z2' parallel to the axis Z2 and spaced therefrom. The pillar 2' is fixed to the body 6 of the column 2 and is fixed both in its axial position, and in its angular position around the axis Z2. This means thus that the relative position between the axes Z2 and Z2', that constitute the centre of rotation of the articulated quadrilateral mechanism, does not vary.

The second end of the rocker 40A' is articulated to a first stem of the rod 40B' by means of a hinge with axis ZA' parallel to the axes Z2 and Z2'. Last a second end of the rod 40B' is articulated to a second end of the rocker 40A' (opposite to the first end) by means of a hinge with axis ZB'. The axis ZA' and ZB' are parallel to one another and to the axis Z2, Z2', and the complex of the four axes mentioned above defines the vertices of a quadrilateral.

The rod 40B' further has a connection interface for the rack 42' for example a fastening flange.

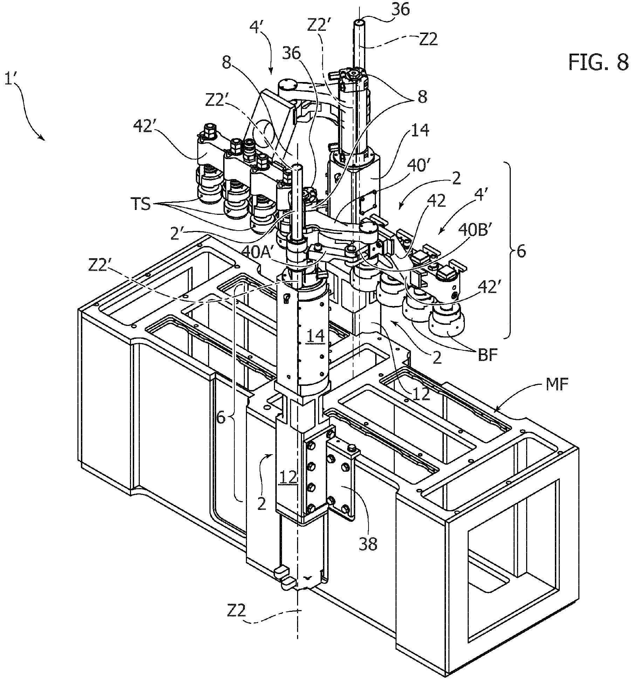

The hinges associated to the axes Z2', ZB', ZA' (second, third and fourth longitudinal axis) are all movable in space, in particular they are movable at least in rotation around the axis Z2 (first longitudinal axis). During the roto-translation of the stem 8 along and around the axis Z2, the geometry of the articulated quadrilateral of each unit 4' varies from the condition of figures 7A, 7B, which are associated to the first position of the handling unit 1, that of resting/stand by, to the position of figure 8, which is associated to the working position of the accessory-carrying units 4'.

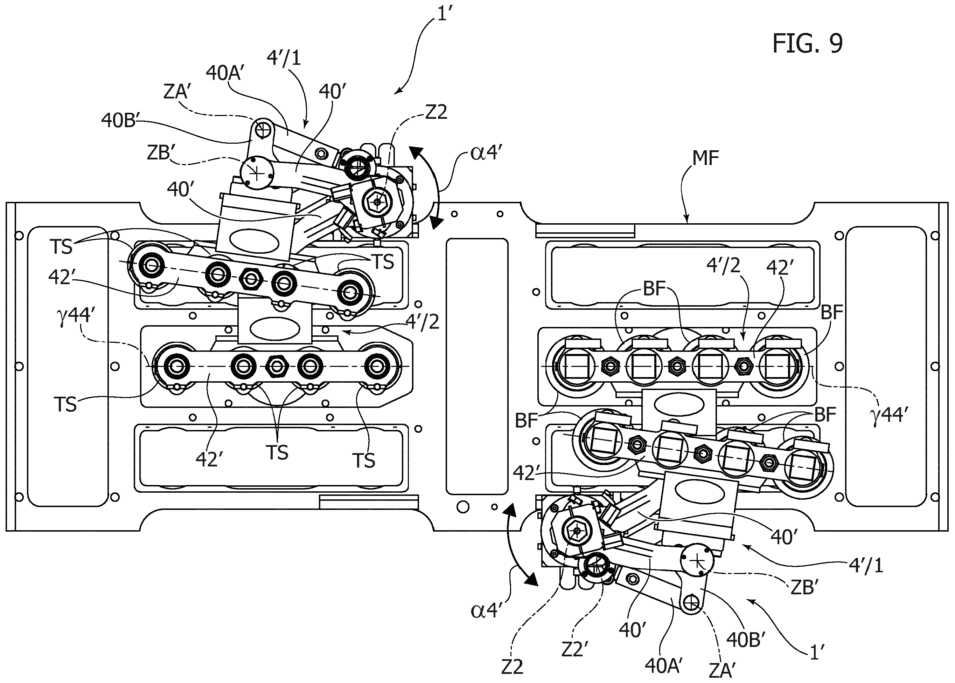

With reference to figure 9 it is immediately visible the advantage in the use of an articulated quadrilateral handling unit 4' with respect to the use of a fixed geometry handling unit 4.

Figure 9 shows the two operating position of each handling unit 1' with the same references previously used (1 for the first position, 2 for the second). The most evident difference is providing the correspondence of the first position: the angular excursion α4' of the stems 8 and of the rockers 40' being equal (with respect to the excursion α4), the transverse overall dimensions of the rack 42' is significantly reduced with respect to the case shown in figure 5 and corresponding to the unit 4 thanks to the fact that the articulated quadrilateral mechanism allows to reposition the rack 42' with respect to the rocker 40', particularly by reducing the angle comprised between the rack 42' to bring the former in a more overlapping position with respect to the frame MF than how is the rack 42 in the same operating condition.

In particular, it is possible to keep the racks 42' in a completely inboard position with respect to the frame MF thus clearing the areas adjacent to the frame MF to the advantage of the safety (quasi-absence of mobile parts outside the perimeter of the frame MF). For this reason, although maintaining all the advantages in terms of positioning precision and the speed of operation, the handling unit 1' (particularly the accessory-carrying unit 4') turns out to be particularly recommended in all those applications wherein the available spaces are very reduced or wherein it is necessary to clear the area surrounding the frame MF - as said - for safety or maintenance reasons, but most of all to limit the inertial forces that have to be countered during displacement, with subsequently increase of the maneuvering speed.

Of course, the constructional details and the embodiments may be widely varied with respect to what described and shown herein without by this departing from the scope of the present invention, as defined by the appended claims.

For example, although herein a column 2 has been shown wherein the mechanical transmission between the motor 10 and the stem 8 is of the screw-nut type, in alternative embodiments it is possible to use a mechanical transmission with rack and pinion for the axial displacement of the stem 8, thus maintaining a rotary electric motor similar to the motor 10 but mounted with axis orthogonal to the axis Z2, so as to fit a pinion on the output shaft thereof and engage the same pinion with a rack coaxial to the axis Z2, fixed to the stem 8 and provided with the possibility of relative rotational movement with respect to the stem 8 so as to allow the rotary movement of the latter via the cam defined by the pin 26 and the track 28.

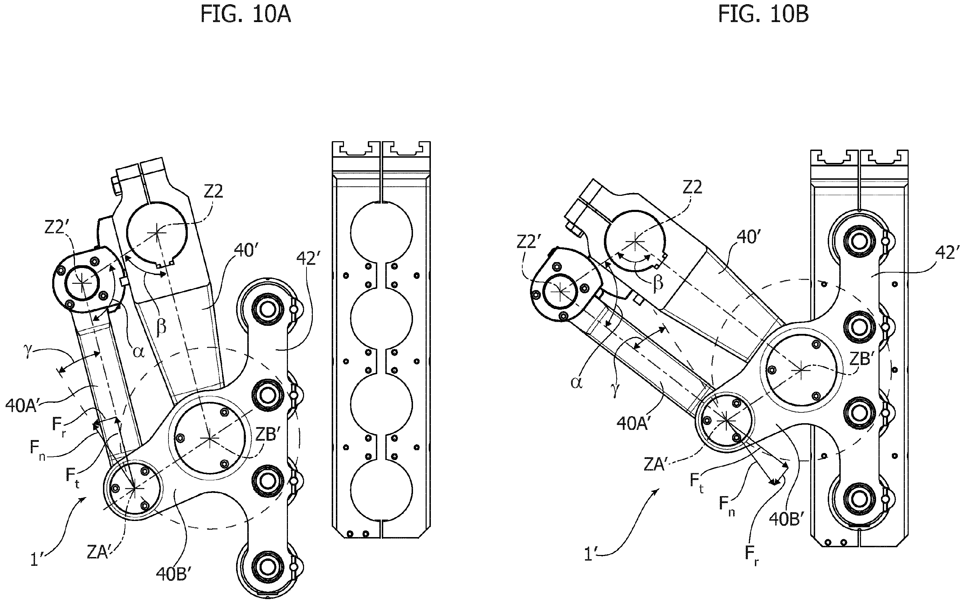

Furthermore, with reference to figures 10A and 10B, the geometry of the handling unit 1' may be optimized so as to reduce the vibrations during operation in both operating positions (the one, that of resting/stand by shown in figure 10A, the other, the working one, shown in figure 10B).

The inventors have furthermore observed that, named:

Fn the force exchanged in correspondence of the hinge with axis ZA' and having direction orthogonal to the direction ZA'/ZB' (that connects the axes ZA' and ZB'),

Ft the component of the force Fn along the direction ZA'/Z2' (that connects the axes ZA' and Z2', that is oriented along the axis of the arm 40A'), and

Fr the component of the force Fn along the direction orthogonal to the direction ZA'-Z2' (thus orthogonal to the component Ft)

$\alpha$ the angle comprised between the directions Z2'-Z2' (that connects the axes Z2' and Z2) and Z2'-ZA' (that connects the axes Z2' and ZA')

$\beta$ the angle comprised between the directions Z2'-Z2' (that connects the axes Z2 and Z2') and Z2-ZB' (that connects the axes Z2 and ZB')

$\gamma$ the angle comprised between the direction ZA'-Z2' (that is the direction of the component Ft) and the force Fn the system is substantially free from appreciable vibrational phenomena in correspondence of the operating position when the ratio Ft/Fr is higher or equal to 3. The man skilled in the art will appreciate that this ratio depends, i.a., from the value of the angle $\gamma$.

Several known handling units envisage a geometry that privileges smooth operation in correspondence of one single working position. This means that in correspondence of the privileged working position the ratio Ft/Fr is markedly higher than 3, while in the other working position this ratio inevitably falls below such threshold, oftentimes below unit. This means that the absolute value of the angle $\gamma$ differs from one angular position of the accessory-carrying unit 4' to the other, that is between one and the other operating position.

On the contrary, in an advantageous embodiment of the unit 1' the geometry thereof is chosen so that the absolute value of the angle $\gamma$ is constant in one and the other operating positions.

This can be achieved by assigning to the articulated quadrilateral mechanism the geometry of a parallelogram and by dimensioning the arms of the mechanism and the distances between the axes Z2, Z2', ZB', ZA' so that the value of the angle $\alpha$ on the first angular position of the accessory-carrying unit 4' is equal to the value of the angle $\beta$ in the second angular position of the accessory-carrying unit 4' and vice versa.

As far as the interaxes are concerned, it is thus envisaged that:

- the distance between the first longitudinal axis Z2 and the second longitudinal axis Z2' be equal to the distance between the fourth longitudinal axis ZA' and the third longitudinal axis ZB'
- the distance between the first longitudinal axis Z2 and the third longitudinal axis ZB' be equal to the distance between the fourth longitudinal axis ZA' and the second longitudinal axis Z2'.

This furthermore means that, calculating the absolute value of the angle $\gamma$ as

$$|\gamma| = |(\alpha - \beta)|/2$$

with the above premises, such absolute value is always constant because in a parallelogram the following applies

$$\beta = 180° - \alpha,$$

wherefrom

$$|\gamma| = |(2\alpha - 180°)|/2 = |(\alpha - 90°)|$$

and indicated by

$$\alpha = 90° + \alpha_0$$

with $\alpha_0$ higher, lower, or equal to 0
it is obtained

$$|\gamma| = |(\alpha - 90°)| = |\alpha_0 + 90° - 90°)| = |\alpha_0|$$

In the example shown in figure 10 (A, B), without this constituting any limitation, it is

Stand-by/resting position (figure 10A)

$$\alpha = 109°$$

$$\alpha_0 = +19°$$

$$\beta = 180° - \alpha = 71°$$

$$|\gamma| = |109° - 71°|/2 = |38°/2| = 19° = |\alpha_0|$$

Working position (figure 10B)

$$\alpha = 71°$$

$$\alpha_0 = -19°$$

$$\beta = 180° - \alpha = 109°$$

$$|\gamma| = |71° - 109°|/2 = |-38°/2| = 19° = |\alpha_0|$$

This corresponds to a value of the ratio Ft/Fr equal to 2.904 in both the operating positions: in addition to being almost coincident with the optimal value equal to 3, the ratio is constant in each of the two positions, thus guaranteeing the same smooth operation and the absence of vibrations to each of the two operating positions.

**Claims**

1. A handling unit (1; 1') of accessories (BF, TS) for a hollow glass article forming machine, the handling unit (1; 1') including a column (2) having a longitudinal axis (Z2) and an accessory-carrying unit (4; 4') connected to said column (2), said column (2) including:

   - a stem (8) slidably mounted within a body (6) of said column (2) and axially movable along said longitudinal axis (Z2), wherein said accessory-carrying unit (4) is connected to said stem (8), said stem (8) being hollow,
   - a cam (26, 28) configured to impart to said stem (8) a rotary motion around said longitudinal axis (Z2) upon the occurrence of a movement of the stem (8) along the longitudinal axis (Z2) itself,
   - an electric motor (10) configured for the axial displacement of said stem (8) between a position extracted with respect to the body (6) of said column (2) and a position retracted with respect to the body (6) of said column (2), wherein in the extracted position of the stem (8) the accessory-carrying unit (4; 4') occupies a first angular position around said longitudinal axis (Z2), and wherein in the retracted position of the stem (8) the accessory-carrying unit (4; 4') occupies a second angular position around said longitudinal axis (Z2), different from said first angular position,

   wherein:

   - said cam includes a cam follower pin (26) engaged in a cam track (28) provided within the body (6) of said column (2), wherein the cam follower pin (26) is fixed to said stem (8) and radially protrudes with respect thereto,
   - said cam follower pin (26) traverses the stem (8) and engages into walls thereof in correspondence of two wall areas arranged on opposite sides with respect of said longitudinal axis (Z2).

2. The handling unit (1; 1') according to claim 1, wherein a stand-by position of said accessory-carrying unit (4; 4') corresponds to the extracted position of the stem (8), while a working position of said accessory-carrying unit (4; 4') corresponds to the retracted position of the stem (8).

3. The handling unit (1; 1') according to any of Claims 1 or 2, wherein said stem (8) is axially displaceable by means of a threaded bar (20) operable in rotation by means of said electric motor (10) and engaged into a nut (24) connected to said stem (8).

4. The handling unit (1; 1') according to Claim 3, wherein said stem (8) has a cylindrical shape and houses therein:

   - a spacing member (30) abutting on said threaded bar (20) and having the possibility of rotary relative motion with respect thereto, and
   - a helical spring (34) having a first end abutting on said spacing member (30) and a second end abutting on a plug (36) that closes said stem (8).

5. The handling unit (1; 1') according to Claim 4, wherein said helical spring (34) abuts on said spacing member (30) by means of the interposition of a cup shaped member (37) that receives said helical spring (34) and that abuts on said spacing member (30) by means of a thrust bearing (37A).

6. The handling unit (1; 1') according to Claim 4, wherein said spacing member (30) is a tubular spacing member including two or more axial slots (30A) configured for accommodating relative motion of said cam follower pin (26) with respect to said threaded bar (20).

7. The handling unit (1; 1') according to Claim 1, wherein said electrical motor (10) is an electric servo motor of the rotary type.

8. The handling unit (1) according to Claim 1, wherein said accessory-carrying unit (4) includes a rocker (40) connected in rotation and in translation to sais stem (8) and a rack (42) fixed to said rocker, said rack (42) including one or more seats (44) for accessories (BF, TS) of hollow glass articles forming machine.

9. The handling unit (1) according to Claim 1, wherein said accessory-carrying unit (4') comprises an articulated quadrilateral mechanism (40', 40A', 40B') and a rack (42') including one or more receptacles (44) for accessories (BF, TS) of a hollow glass article forming machine, said articulated quadrilateral mechanism (40', 40A', 40B') including:

   - a first rocker (40') connected in rotation and in translation to said stem (8),
   - a second rocker (40A') pivotally connected to a pillar (2') having an axis (Z2') parallel to said longitudinal axis (Z2) and defining a second longitudinal axis,
   - a rod (40B') having a first end articulated to said first rocker (40') around a third longitudinal axis (ZB') parallel to said second longitudinal axis (Z2), and a second end pivotally connected to said second rocker (40B') around a fourth longitudinal axis (ZA') parallel to said longitudinal axis (Z2), said rack (42') being fixed to said rod (40B').

10. The handling unit (1') according to Claim 9, wherein:

    - an interaxis between said longitudinal axis (Z2) and a second longitudinal axis (Z2') is equal to an interaxis between a fourth longitudinal axis (ZA') and a third longitudinal axis (ZB')
    - the interaxis between the longitudinal axis (Z2') and the third longitudinal axis (ZB') is equal to the interaxis between the second longitudinal axis (ZA') and the fourth longitudinal axis (ZA').

11. The handling unit (1') according to claim 10, wherein named:

    - $\alpha$ an angle comprised between a first direction (Z2-Z2') that connects the second longitudinal axis (Z2') and said longitudinal axis (Z2) and a direction (Z2'-ZA') that connects the second longitudinal axis (Z2') and the fourth longitudinal axis (ZA')
    $\beta$ an angle comprised between the first direction (Z2-Z2') and a third direction (Z2-ZB') that connects the longitudinal axis (Z2) and the third longitudinal axis (ZB')
    the value of the angle $\alpha$ in the first angular position of the accessory-carrying unit (4') corresponds to the value of the angle $\beta$ in the second angular position of the accessory-carrying unit (4') and vice versa.

12. The handling unit (1') according to Claim 9, wherein said pillar (2') is fixed to the body (6) of said column (2).

13. The handling unit (1') according to Claim 1, wherein the cam track (28) includes a helical portion that is configured to impart to the stem (8) a rotation around said longitudinal axis (Z2) when the stem (8) is an axial motion along the longitudinal axis (Z2) itself, said helical portion being preceded and/or followed by a rectilinear portion that keeps the stem (8) in a determined angular position, correspondingly, at the beginning and/or at the end of the linear travel thereof.

FIG. 1

EP 3 192 775 A1

# FIG. 2

A.

B.

FIG. 3A

FIG. 3B

IIIB

γ44

BF

44

44

44

44

BF

BF

42

40

8

2

36

4

Z2

BF

44

42

44

40

Z2

36

8

BF

γ44

4

2

14

BF

EP 3 192 775 A1

FIG. 4

FIG. 5

EP 3 192 775 A1

FIG. 6

EP 3 192 775 A1

FIG. 7B

FIG. 7A

FIG. 8

FIG. 9

FIG. 10A

FIG. 10B

EP 3 192 775 A1

Europäisches
Patentamt

European
Patent Office

Office européen
des brevets

# EUROPEAN SEARCH REPORT

Application Number

EP 16 15 1219

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 0 915 269 A1 (EMHART GLASS SA [CH]) 12 May 1999 (1999-05-12) * figures 1-3 * | 1-13 | INV. C03B9/16 F16H57/04 |
| X | FR 1 291 067 A (OWENS ILLINOIS GLASS CO) 20 April 1962 (1962-04-20) * figures 5,7 * | 1-13 | |
| X | FR 1 539 292 A (OWENS ILLINOIS INC) 13 September 1968 (1968-09-13) * Pin, 42 * | 1-13 | |
| X | DE 12 70 743 B (OWENS JLLINOIS INC) 20 June 1968 (1968-06-20) * figure 4 * | 1-13 | |

TECHNICAL FIELDS
SEARCHED (IPC)

C03B
F16H

The present search report has been drawn up for all claims

| Place of search | Date of completion of the search | Examiner |
|---|---|---|
| The Hague | 18 July 2016 | Marrec, Patrick |

EPO FORM 1503 03.82 (P04C01)

**ANNEX TO THE EUROPEAN SEARCH REPORT
ON EUROPEAN PATENT APPLICATION NO.**

EP 16 15 1219

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2016

| Patent document cited in search report | | Publication date | Patent family member(s) | Publication date |
|---|---|---|---|---|
| EP 0915269 | A1 | 12-05-1999 | NONE | |
| FR 1291067 | A | 20-04-1962 | NONE | |
| FR 1539292 | A | 13-09-1968 | NONE | |
| DE 1270743 | B | 20-06-1968 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9010520 B
- EP 0915269 A1